(19) Europäisches Patentamt
European Patent Office
Office européen des brevets

(11) **EP 0 966 727 B1**

(12) **EUROPÄISCHE PATENTSCHRIFT**

(45) Veröffentlichungstag und Bekanntmachung des Hinweises auf die Patenterteilung:
**16.08.2001 Patentblatt 2001/33**

(51) Int Cl.[7]: **G06T 7/20**

(21) Anmeldenummer: **98907892.8**

(86) Internationale Anmeldenummer:
**PCT/DE98/00413**

(22) Anmeldetag: **11.02.1998**

(87) Internationale Veröffentlichungsnummer:
**WO 98/41950 (24.09.1998 Gazette 1998/38)**

(54) **KOMPAKTES SENSORSYSTEM ZUR OPTISCHEN BEWEGUNGSERKENNUNG IN ECHTZEIT**

COMPACT SENSOR SYSTEM FOR REAL TIME OPTICAL MOTION DETECTION

SYSTEME DE DETECTION COMPACT POUR LA RECONNAISSANCE OPTIQUE EN TEMPS REEL DES DEPLACEMENTS

(84) Benannte Vertragsstaaten:
**DE FR GB NL**

(30) Priorität: **15.03.1997 DE 19712017**

(43) Veröffentlichungstag der Anmeldung:
**29.12.1999 Patentblatt 1999/52**

(73) Patentinhaber: **GMD - FORSCHUNGSZENTRUM INFORMATIONSTECHNIK GMBH D-53754 Sankt Augustin (DE)**

(72) Erfinder: **RÖWEKAMP, Thomas D-44867 Bochum (DE)**

(74) Vertreter: **Hilleringmann, Jochen, Dipl.-Ing. et al Patentanwälte von Kreisler-Selting-Werner, Bahnhofsvorplatz 1 (Deichmannhaus) 50667 Köln (DE)**

(56) Entgegenhaltungen:
**EP-A- 0 596 409**

• **WHITTEN G: "INDEPENDENT MOTION TARGET CUEING FOR MOVING SENSOR SYSTEMS" APPLICATIONS OF ARTIFICIAL INTELLIGENCE, ORLANDO, APR. 4 - 6, 1988, Nr. CONF. 6, 4.April 1988, TRIVEDI M M, Seiten 336-341, XP000044467**

**EP 0 966 727 B1**

**Beschreibung**

Die Erfindung bezieht sich auf ein kompaktes Sensorsystem zur optischen Bewegungserkennung durch Echtzeit-Berechnung der x- und y-Komponenten des optischen Flusses aus einer Bildfolge nach einem vorgegebenen Algorithmus mit einer auf einer zweidimensionalen Photodiodenmatrix basierenden Bilddatengebereinheit mit einem Anpassungsbereich und einer zumindest abschnittsweise sequentiellen Bilddatenausgabe und mit einer auf einem anwenderspezifischen CMOS-Logikbaustein basierenden hochratigen Bilddatenverarbeitungseinheit mit einer Vorverarbeitungs- und einer Berechnungslogik sowie einem externen, wahlfrei über zwei Parallelports zugänglichen Arbeitsspeicher und einer Kontrolleinheit.

Durch die relative Bewegung zwischen einem Betrachtungssystem und seiner Umgebung entsteht eine Bildbewegung als Projektion der Umgebung auf die Bildoberfläche des Betrachtungssystems. Die vierdimensionale Raum-Zeitkurve des betrachteten physikalischen Objektes wird dabei unter Verlust der Raumtiefe in eine dreidimensionale Orts-Zeitkurve überführt. Die zeitliche Veränderung der Position eines Umgebungspunktes kann durch einen Geschwindigkeitsvektor (Bewegungsvektor) beschrieben werden. Geht man davon aus, dass jedem Bildpunkt auf der Bildoberfläche ein Umgebungspunkt entspricht, erhält man durch die zeitliche Ableitung aller Bildpunkte das Geschwindigkeitsvektorfeld (Bewegungsvektorfeld). Ein aus der Verarbeitung des Abstrahlverteilungsfeldes (Helligkeitsmuster) einer Bildfolge resultierendes Bewegungsfeld bezeichnet man als "optischen Fluss" (optical flow). Dies ist ein meist fehlerbehafteter Schätzwert des entsprechenden Bewegungsvektorfeldes, der u.a. durch unzureichend texturierte Umgebungen bedingt sein kann. Für hinreichend stark texturierte Szenerien, und solche sollen bei den Anwendungen für die vorliegende Erfindung betrachtet werden, entspricht der optische Fluss aber dem Bewegungsvektorfeld. Dieses kann also durch die Berechung des optischen Flussen aus Bildfolgen hinreichend beschrieben werden.

Anwendungsfelder für die optische Bewegungserkennung in Echtzeit sind in den unterschiedlichsten Bereichen zu finden (Übersicht im Aufsatz "Computation and Analysis of Image Motion : A Synopsis of Current Problems and Methods", A. Mitchie et al., Int. Journal of Computer Vision, Vol. 19, No.1, 1996, pp. 29-55). Hierzu zählen beispielsweise die Steuerung von mobilen Robotern und autonomen Fahrzeugen nach deren beobachtbarer Fortbewegung, von Verkehrsleitsystemen und Ampeln nach dem beobachtbaren Verkehrsgeschehen und von Manipulatoren und Interfaces nach beobachtbaren menschlichen Bewegungen und Gesten. Gerade bei der Steuerung von mobilen Robotern ist eine kompakte Ausgestaltung des zu verwendenden Sensorsystem, wie es der Erfindung zugrunde liegt, von besonderem Vorteil, so dass dieser Bereich als Hauptanwendungsgebiet der Erfindung anzusehen ist.

Zur Berechnung des optischen Flusses existieren verschiedene Algorithmen, die auf unterschiedlichen Verfahren basieren (Übersicht im Aufsatz "The Computation of Optical Flow", S.S. Beauchemin et al., ACM Computing Surveys., September 1995, Vol.27, No.3). Die differentiellen Verfahren (Gradientenverfahren) berechnen den optischen Fluss basierend auf räumlichen und zeitlichen Differenzen (Gradienten) zwischen den Einzelbildern der Bildfolgen. Block- oder Regionsvergleichsverfahren (Korrelationsverfahren) berechnen Verschiebungen, indem das Maximum der Korrelation eines lokalen Bildbereiches mit einem gewissen Bereich im folgenden Bild gesucht wird. Energie- und phasenbasierte Filterverfahren wenden auf die Bildfolgen zunächst eine Reihe geschwindigkeitsspezifischer Filter an, um daraus den optischen Fluss zu berechnen. Diese Filterverfahren benötigen jedoch wegen der großen Filteranzahl eine große Rechenkapazität und sind für Echtzeit-Anwendungen ungeeignet. Regionsvergleichsverfahren benötigen durch den Vergleich kleiner kompletter Bildausschnitte ebenfalls eine große Rechenkapazität und dazu noch eine komplexe Speicherverwaltung. Die Differenzenverfahren arbeiten dagegen mit lokalen Bildeigenschaften, wie den partiellen örtlich-zeitlichen Ableitungen örtlich und zeitlich benachbarter Pixel. Außerdem weisen sie bei pixelunterschreitenden Geschwindigkeiten eine gute Leistungsfähigkeit auf, wodurch diese Verfahren für Anwendungen mit einer Weiterverarbeitung des optischen Flusses, beispielsweise zur Berechnung der Zeit bis zum möglichen Zusammenstoß (time-to-crash) zwischen zwei beobachteten Objekten, eine besondere Bedeutung haben. Bei den Differenzenverfahren sind jedoch solche auszuschließen, bei denen auch zweite Ableitungen auftreten, da diese eine große Rauschanfälligkeit der entsprechenden Hardware zur Folge haben.

Die wichtigsten Beiträge in Richtung eines optischen Bewegungssensors kommen aus der Gruppe von C. Koch am California Institute of Technology ("Computing Motion Using Analog and Binary Resistive Networks", J.Hutchinson et al., IEEE Computer, March 1988, pp.52-63; "An Analog VLSI Velocitiy Sensor", J.Kramer et al., Proc. Int'l Symposium on Circuits and Systems", IEEE, Piscataway, N.J., 1995, pp. 413-416; "System Implementation of Analog VLSI Velocity Sensors", IEEE Micro, October 1996, pp. 40-49). Diese Arbeiten haben zwar ähnliche wie die oben genannten Anwendungen im Sinn, arbeiten aber mit Implementierungen, die auf analoger CMOS-Technologie beruhen. Außerdem werden bei den aus diesen Aufsätzen bekannten Sensorsystemen die Photodioden zusammen mit der Bilddatenverarbeitung implementiert, was hochgradig parallel ist und relativ kleine Bildbereiche bedingt. Andere benutzen spezielle Rechnerarchitekturen, wie zum Beispiel Transputernetzwerke. Aus dem Aufsatz "Robot Vision System with a Correlation Chip for Real-Time Tracking, Optical Flow and Depth Map Generation", H. Inoue et al., Proc. IEEE Int. Conf. on Robotics and Automation, 1992, pp.1621-1626, ist es bekannt, zusätzliche Korrelationsschaltungen und aus dem Aufsatz "VLSI Neuroprocessors for Video Motion Detection", J.-C- Lee et al., IEEE Trans. on Neural

2

Networks, March 1993, Vol.4, No.2, spezielle neuronale Schaltungen einzusetzen. Diese Systeme werden zwar zur Berechnung des optischen Flusses verwendet, sind aber in sich schon relativ komplex und daher nicht geeignet, als Sensor in autonomen Fahrzeugen eingesetzt zu werden.

Der **Stand der Technik,** von dem die Erfindung ausgeht, wird gebildet von dem Aufsatz : "A real-time, miniaturized optical sensor for motion estimation and time-to-crash detection" von N.Ancona, G.Creanza et al., der als Vortrag zum ESPRIT 8867 VISTA-Projekt auf der AFPAEC Europto Berlin am 10.10.1996 gehalten wurde (VISTA project. http://www.imec.be/fuga/cmos/vista.html; e-mail : creanza@rob.csata.it).

Dem aus diesem Aufsatz bekannten kompakten hochratigen Sensorsystem liegt zur Einhaltung der Echtzeitbedingung ein in seiner Komplexizität drastisch reduziertes und damit angenähertes Korrelationsverfahren (1D-Korrelation) als Algorithmus zugrunde, bei dem nicht der korrelierte optische Fluss für kleine komplette Bildausschnitte, sondern dessen korrelierte Komponenten in x- und y-Richtung separat berechnet werden. Dafür benötigt das bekannte Sensorsystem einen für die Berechnung des optischen Flusses speziell entwickelten Bilddatengeber, dessen Detektorbereich geometrisch so gestaltet ist, dass er die Daten bereits vorverarbeiten kann (On-Chip-Gauß-Filter). Bei der realisierten Anordnung von 6 x 6 einzelnen, aus einer Vielzahl von einzeladressierten Photodioden bestehenden Bewegungsdetektoren können entsprechend nur 36 Bewegungsvektoren über einen sehr kleinen Feldbereich in der Bilddatenverarbeitungseinheit, an die die Bilddaten nur abschnittsweise sequentiell ausgegeben werden, berechnet werden. Die Auflösung und die Verarbeitungsgeschwindigkeit des bekannten Sensors sind deshalb relativ gering. Die Bilddatenverarbeitungseinheit weist bei dem bekannten Sensor einen speziell entwickelten anwenderspezifischen Logikbaustein mit einer regelmäßigen Mikrostruktur auf, bei dem eine Datenvorverarbeitung zur Vergrößerung des Signal-Rausch-Abstandes (edge enhancement) und die Abarbeitung des eigentlichen Algorithmus über spezielle Software in direkt gesteuerter Abhängigkeit von einem Microcontroller erfolgt. Die Datenausgabe erfolgt bildweise, dazwischen finden weiterverarbeitende Schritte statt.

Das **technische Problemfeld,** mit dem sich die Erfindung befasst, bezieht sich darauf ein komoaktes Sensorsvstem mit hoher Berechnungsgeschwindigkeit der eingangs beschriebenen Art so weiterzubilden, dass es kostengünstig mit allgemein zur Verfügung stehenden Mitteln ausrüst- und herstell- sowie kombinierbar ist und dabei eine kontinuierliche Berechnung des optischen Flusses in Echtzeit auch für sehr große und segmentierbare Bildbereiche mit guter Bildauflösung, Verarbeitungsgeschwindigkeit und Genauigkeit ermöglicht. Dabei soll das kompakte Sensorsystem eine vielseitige Verwendbarkeit aufweisen, insbesondere soll es in einer derartig miniaturisierten Form gestaltbar sein, dass auch Anwendungsanforderungen mit äußerst geringem Platzangebot für den Sensor erfüllt werden können.

Die **erfindungsgemäße Lösung** für dieses Aufgabenfeld sieht vor, dass in der Bilddatenverarbeitungseinheit die Umsetzung einer kontinuierlichen iterativen Berechnung der x- und y-Komponenten des optischen Flusses nach dem Gradienten-Algorithmus von Hom und Schunck ausschließlich durch eine digitale Hardware-Architektur des anwenderspezifischen CMOS-Logikbausteins in Form einer konsequenten Pipeline-Struktur mit einer einfachen Datenrückführung realisiert ist, in die die Vorverarbeitungslogik mit einer ersten arithmetischen Recheneinheit durch das Vorschalten von einem ersten Schieberegister und die Berechnungslogik mit drei weiteren arithmetischen Recheneinheiten durch das Vorschalten von drei weiteren Schieberegistern und mit einem mehrere Pipelinestufen aufweisenden Block zur Berechnung des optischen Flusses integriert sind, und dass der externe Arbeitsspeicher aus drei identischen Speicherelementen aufgebaut ist, die jeweils einer der drei weiteren arithmetischen Einheiten zugeordnet sind

Von wesentlicher Bedeutung für die Erfindung ist die neue Pipeline-Architektur in der Bilddatenverarbeitungseinheit für eine kontinuierliche Berechnung des optischen Flusses in Echtzeit. Mit ihr wird ein in bekannter Softwarelösung vorgegebener Algorithmus vollständig in eine Echtzeit-Hardware durch ausschließliche Benutzung von hardwaretechnischen Zusammenhängen in einem geradlinigen Lösungsweg umgesetzt. Der optische Fluss kann mit dem erfindungsgemäßen Sensor über große Bildbereiche, beispielsweise bis 512 x 512 Bewegungsvektoren, berechnet werden. Alle Anwendungen, in denen unterschiedliche Bewegungen segmentiert werden, benötigen eine optische Flussberechnung für sehr große Bildbereiche. Dabei bewirkt die Softwareentlastung des anwenderorientierten Logikbausteins (CMOS-ASIC) durch die Hardwarerealisierung die Erhöhung der Bildverarbeitungskapazität in Richtung der großen Bildbereiche. Die Bildverarbeitungsgeschwindigkeit kann bis 1500 Bilder/Sekunde betragen und ist letztendlich nur noch von der Leistungsfähigkeit des Bilddatengebers abhängig. Durch die konsequente Anwendung des Pipelining-Konzeptes und durch die Anpassung aller Funktionseinheiten an dieses Konzept wird ein maximaler Datendurchsatz erzielt, der den Einsatz des erfindungsgemäßen kompakten Bewegungssensor-Systems unter Echtzeitbedingungen ermöglicht. Die geradlinige Rechenarchitektur kann einfach in digitale Hardware umgesetzt und in eine integrierte Schaltung mittels eines CMOS-Standardzellenprozesses implementiert werden. Dies ist eine eingeführte und gut beherrschbare Technologie. Der Arbeitsspeicher besteht aus drei identischen Speicherelementen, die handelsüblich erhältlich sind. Durch das vollständig sequentielle Einlesen und Verarbeiten von Bilddaten besteht eine optimale Anbindung an kommerziell verfügbare Bilddatengeber. Das Format und das vollständig sequentielle Schreiben der Geschwindigkeitsvektoren im optischen Fluss ermöglichen eine einfache Verbindung zu externen kommerziellen Segmentierungs- und Bildweiterverarbeitungssystemen (Framegrabberkarten o.ä.).

Deshalb ist es nach einer Ausgestaltung des erfindungsgemäßen kompakten Sensorsystems besonders vorteilhaft, wenn die zweidimensionale Photodiodenmatrix von einem standardisierten Bilddatengeber mit einer vollständig sequentiellen Datenausgabe gebildet ist. Hierbei kann es sich beispielsweise um einen CCD-Chip mit zugehörigen Treiberschaltungen oder um eine CMOS-Photodiodenmatrix handeln. Beide Bildgeber sind handelsüblich zu beziehen und damit kostengünstig. Teure Spezialanfertigungen für den Bilddatengeber, die gegebenenfalls auch Vorverarbeitungsschritte durchführen müssen, sind nicht erforderlich. Zusätzliche Schaltungen sind notwendig zur Anpassung des jeweilig eingesetzten Bilddatengebers an die Bilddatenverarbeitungseinheit. Entsprechend einer weiteren Fortführung der Erfindungsidee ist es darum günstig, wenn der Anpassungsbereich von einem externen, freiprogrammierbaren Logikbaustein gebildet ist. Hierbei kann es sich beispielsweise um einen FPGA (field programmable gate array) handeln, bei dem Hardware softwaretechnisch erzeugbar ist und der damit universeller einsetzbar als ein Mikroprozessor ist. Wird die Funktionalität des FPGA nicht als Teil der Bilddatenverarbeitungseinheit implementiert, erreicht man eine gewisse Flexibilität bei der Gestaltung. Außerdem können hiermit beispielsweise zusätzliche Synchronisationssignale für ein digitales Sensorinterface, das Bildatengeber und Bilddatenverarbeitungseinheit örtlich unabhängiger voneinander macht, erzeugt werden.

Pipelinestrukturen sind in der Bildverarbeitung allgemein bekannt, weil sie sich besonders für kontinuierliche Berechnungen eignen. Sie zeichnen sich im allgemeinen dadurch aus, dass während eines mehrstufigen Datenverarbeitungsprozesses die Daten in allen Stufen der Verarbeitung vorliegen. Mit dem Taktsignal wird ein Datum zunächst in die erste Stufe eingelesen und bearbeitet und anschließend zur nächsten Bearbeitungsstufe weitergegeben, währenddessen bereits ein neues Datum in die erste Stufe eingelesen wird. Auf diese Weise wird Takt für Takt die gesamte Pipeline gefüllt. Die Anzahl der Takte, die ein Datum benötigt, um die gesamte Pipeline zu durchlaufen, wird als Latenz bezeichnet. Wenn man mit jedem Takt ein neues Datum liest und ein Ergebnis schreibt, hat man eine Pipeline mit maximalem Datendurchsatz.

Bei der Erfindung werden die Vorverarbeitungs- und die Berechnungslogik durch Vorschalten von Schieberegistern in die Pipelinestruktur konsequent eingefügt. Bei der Implementierung eines Schieberegisters in einen CMOS-Standardzellenprozess kann.dieses wegen seines großen Flächenbedarfs nicht vollständig aus Standardzellen aufgebaut werden. Deshalb ist es gemäß einer anderen Weiterbildung des erfindungsgemäßen Sensorsystems besonders vorteilhaft, wenn die Schieberegister jeweils aus zwei Speicherelementen mit wahlfreiem Zugang und einem gemeinsamen Adressenzähler bestehen. Die meisten Standardzellenprozesse bieten die Möglichkeit, RAM-Speicherzellen in einer besonders kompakten Art und Weise zu generieren. Tietze und Schenk ("Halbleiter-Schaltungstechnik", 9.Auflage 1989, Seiten 284/285) zeigen, wie RAM's sich als Schieberegister betreiben lassen, wenn ein Zähler die Adressen zyklisch durchzählt. Werden für eine Berechnung mehrere Werte gleichzeitig benötigt, können beispielsweise zwei RAM's mit einem gemeinsamen Adressenzähler eingesetzt werden. Weitere Ausführungen hierzu siehe im speziellen Beschreibungsteil.

Nach einer anderen Erfindungsausgestaltung kann vorteilhaft die Kontrolleinheit im anwenderspezifischen Logikbaustein implementiert sein. Sie ist dadurch zusammen mit diesem in einem einfachen Standardzellenprozess herstellbar.

Bevor näher auf den Aufbau des erfindungsgemäßen Sensor-Systems eingegangen wird, soll zum besseren Verständnis der eingesetzten Pipelinestruktur zunächst der mit dem System umgesetzte Algorithmus näher erläutert werden. Hierbei handelt es sich um den Algorithmus von Horn und Schunck, wie er im Jahre 1981 veröffentlicht wurde ("Determining Optical Flow", Berthold K.P. Horn und Brian G. Schunck, Artficial Intelligence 17 (1981) 185-203). Die hier beschriebene Methode basiert ausschließlich auf lokalen Operatoren und ist besonders für eine Hardware-Implementation geeignet. Zusätzlich weist der Algorithmus eine iterative Struktur auf und vermeidet die Behandlung von Ausnahmen, wie beispielsweise Diskontinuitäten.

$I$ sei die Intensität (Grauwert) im Bildpunkt $(x,y)$ zur Zeit $t$. Angenommen, die Bildintensität $I$ sei konstant über die Zeit $t$, $dI/dt$ =0, so kann die Gradientengleichung abgeleitet werden als :

$$I_x \cdot u + I_y \cdot v + I_t = 0 \qquad (1)$$

mit

$$u = \frac{dx}{dt}, \ v = \frac{dy}{dt}$$

als x- und y-Komponente des optischen Flusses und $I_x$, $I_y$ und $I_t$ als partielle Ableitungen von $I$ nach $x$, $y$ und $t$. Die Gradientengleichung (1) beschreibt ein unterbestimmtes Gleichungssystem mit den 2 Unbekannten $u$ und $v$. Lediglich die Geschwindigkeitskomponenten orthogonal zu den Isointensitätskurven können ermittelt werden. Deshalb ist eine zusätzliche Bedingung notwendig.

Normalerweise unterziehen sich die beobachteten Objekte in realen Situationen nur stetigen Bewegungen und Deformierungen. In diesem Falle haben benachbarte Punkte ähnliche Geschwindigkeiten. Die Intensitätswerte ändern sich nur geringfügig mit der Zeit. Daher wird eine Glattheitsbedingung eingeführt. In diesem Falle können die Flusskomponenten $u(x,y)$ und $v(x,y)$ durch Minimierung der folgenden Gleichung bestimmt werden :

$$\alpha^2 \iint (u_x{}^2 + u_y{}^2 + v_x{}^2 + v_y{}^2)dxdy + \iint (I_x \cdot u + I_v \cdot v + I_t)^2 dxdt \qquad (2)$$

Der erste Term der Gleichung (2) repräsentiert die Glattheitsbedingung. Im zweiten Term steht die Gradientengleichung. $\alpha$ wird als Glattheitsparameter bezeichnet. Durch Wahl eines geeigneten Wertes für $\alpha$ wird die Gewichtung beider Terme festgelegt. Die partiellen örtlich-zeitlichen Ableitungen $I_x$, $I_y$ und $I_t$ können als Differenz der Intensitäten zwischen zwei benachbarten Punkten in Ort und Zeit angenähert werden.

Wie bei Horn und Schunck beschrieben kann das Minimierungsproblem durch Iteration mittels folgender Jacobi-Gleichung gelöst werden :

$$\left.\begin{pmatrix} u \\ v \end{pmatrix}\right|_{n+1} = \begin{pmatrix} \bar{u} \\ \bar{v} \end{pmatrix} - \frac{I_x\bar{u} + I_y\bar{v} + I_t}{I_x^2 + I_y^2 + 4\alpha^2} \left.\begin{pmatrix} I_x \\ I_y \end{pmatrix}\right|_n \qquad (3)$$

Die Indizes n und n+1 deuten die Iterationsschritte an. Dabei können die Komponenten $\bar{u}$ und $\bar{v}$ durch das Mittel der benachbarten Flusskomponenten, wie sie im vorangegangenen Iterationsschritt berechnet wurden, approximiert werden. Unter der Voraussetzung, dass der Sensor zur kontinuierlichen Benutzung, d.h. zu Beobachtung stetiger Bewegungen, eingesetzt wird, kann die Iteration auf eine Schleife (Iterationswert 1) reduziert werden. Dadurch ist die Iteration durch eine einfache Datenrückführung realisierbar. Bei einer einfachen Datenrückführung muss zu Beginn der Berechnung des optischen Flusses eine gewisse Anzahl Bilder (ungefähr 10 bis 20) verarbeitet werden (Verarbeitungszeit weniger als 1 Sekunde), bevor eine korrekte Berechnung vorliegt. Diese Phase wird als Initialisierungsphase bezeichnet. Danach wird mit jedem Bild ein neues korrektes Optisches-Fluss-Feld berechnet, d.h., die Umgebung kann kontinuierlich beobachtet werden.

**Ausbildungsformen der Erfindung** werden nachfolgend anhand der schematischen Figuren näher erläutert. Dabei zeigt:

Figur 1   eine biockschematische Übersicht über die Systemarchitektur des erfindungsgemäßen Sensorsystems mit Erläuterungen zu einer realisierten Ausführungsform,
Figur 2   ein Blockdiagramm des Datenweges in der Bilddatenverarbeitungseinheit,
Figur 3   den schematischen Aufbau eines Schieberegister,
Figur 4   den Speicherzugriff in einem Schieberegister und
Figur 5   den blockschematischen Aufbau der Pipelinestruktur in der Berechnungslogik.

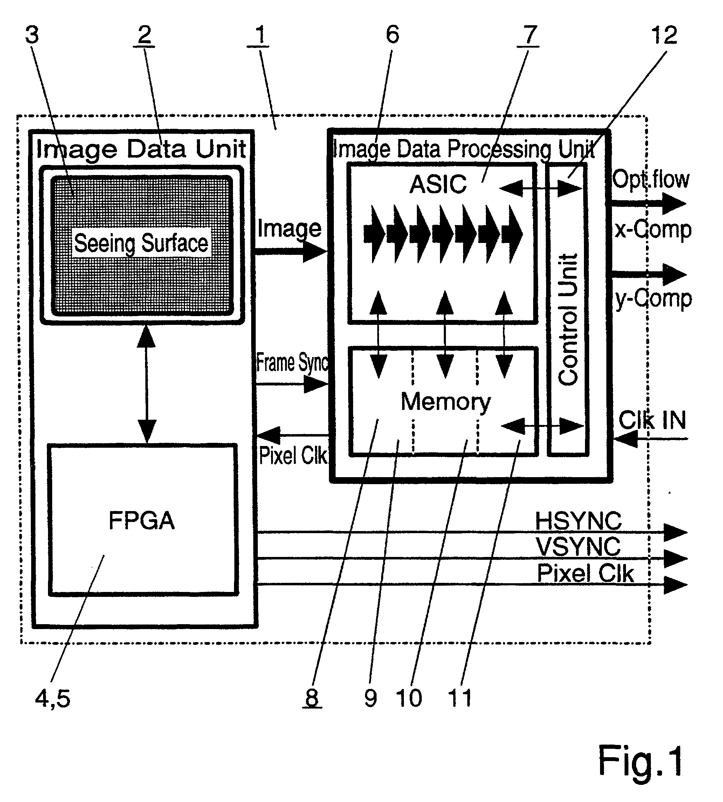

Die **Figur 1** zeigt schematisch ein Sensorsystem **1,** das aus mehreren funktionalen Einheiten aufgebaut ist. Eine funktionale Bilddatengebereinheit **2** besteht aus einem Bilddatengeber **3** und einem Anpassungsbereich **4.** Der Anpassungsbereich **4** liegt außerhalb des Bilddatengebers **3** und wird hier von einem externen, freiprogrammierbaren Logikbaustein **5** in Form eines FPGA als eigenständige weitere funktionale Einheit gebildet. Dieser generiert die Adressen für den Bilddatengeber **3** und erzeugt zusätzlich Synchronisations-signale in horizontaler (**HSYNC**) und vertikaler Bildrichtung (**VSYNC**). Außerdem gibt er das Taktsignal (**Pixel Clock**) aus. Alle diese Signale können in einer nicht weiter dargestellten Weiterverarbeitungseinheit für die Komponten des optischen Flussen benötigt werden.

Der Bilddatengeber **3** liefert die Eingangswerte für eine Bilddatenverarbeitungseinheit **6** als weiterer funktionaler Einheit. Diese Eingangswerte bestehen im Ausführungsbeispiel aus einem seriellen Strom der Grauwerte der Bildpunkte und sind 8-bit (1 Byte) breit, was den Grauwerten von 0 bis 255 entspricht. Der Datenstrom wird von dem Taktsignal getrieben und von einem Synchronisationssignal **(FrameSync),** das den Beginn eines neuen Bildes markiert, gesteuert. Die Bilddatenverarbeitungseinheit **6** liest diese Daten und berechnet daraus den optischen Fluss. Das Ergebnis ist ein zweidimensionales Feld der Bewegungsvektoren, das in einem Ergebnispeicher zwischengespeichert oder direkt von externen Bildweiterverarbeitungseinrichtungen weiteraufbereitet werden kann. Die Vektoren stellen die x- und y-Komponenten, die ebenfalls als 8-bit-Wert dargestellt werden, des Geschwindigkeitsfeldes dar und korrespondieren jeder zu einem Bildpunkt. Die Einheit der Geschwindigkeit ist Weg/Zeit. Die Zeiteinheit ergibt sich aus der Bildfrequenz. Der optische Fluss wird in Bildpunkten/Bild (pixel/frame) gemessen und bei der Erfindung in Form von 8-bit-Werten kodiert. Der Wert 127 entspricht 0 pixel/frame. Es können Geschwindigkeiten zwischen -4 und +4 pixel/frame dargestellt werden. Die kleinste darstellbare Geschwindigkeit entspricht ungefähr 0,016 pixel/frame.

Die Bilddatenverarbeitungseinheit **6** weist einen anwenderspezifischen CMOS-Logikbaustein **7** (ASIC - Application Specific Integrated Circuit) und einen externen Arbeitsspeicher **8** auf. Dieser wird von drei identischen Speicherelementen **9,10,11** in Form von wahlfrei über zwei Parallelports zugänglichen Speicherelementen mit statischer, d.h. andauernder Spannungsversorgung (Dual Ported SRAM, handelsüblich erhältlich) gebildet, die jeweils Daten entsprechend der Größe eines Bildes speichern können. Die Adressen für die Speicherelemente **9,10,11,** die hier als Schieberegister mit einer Speicherkapazität für ein komplettes Bild betrieben werden, sowie alle auftretenden Steuersignale, die vom Taktsignal und vom Bild-Start-Signal ausgehen, werden von einer funktionalen Kontrolleinheit **12** erzeugt, die ebenfalls im Logikbaustein **7** implementiert ist.

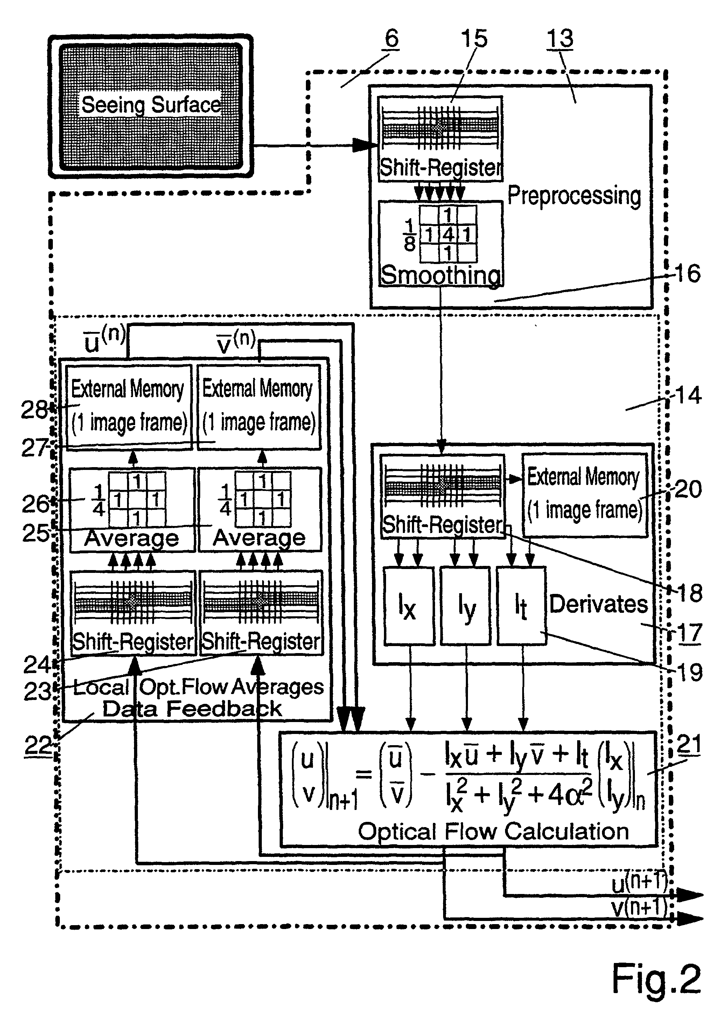

In **Figur 2** ist die Bilddatenverarbeitungseinheit **6** in einem Blockschema strukturell näher dargestellt. Aufgrund des kontinuierlichen Bilddatenflusses bildet eine Verarbeitungs-Pipeline die ideale Hardware-Architektur hierfür. Der Datenpfad ist in mehrere funktionale Blöcke unterteilt : Vorverarbeitungslogik **13,** Block zur Ableitungsbildung **17,** Block zur Berechnung des optischen Flusses **21** und Block zur lokalen Mittelwertbildung der optischen Flusskomponenten **22,** die den iterativen Datenrückführungspfad darstellt. Dabei werden die Blöcke **17, 21** und **22** in der Berechungslogik **14** zusammengefasst. Die Pipelinelänge (Latenz) im gewählten Ausführungsbeispiel für die gesamte Bilddatenverarbeitungseinheit **6** bezieht sich auf vier Bildzeilen und 13 Pixels.

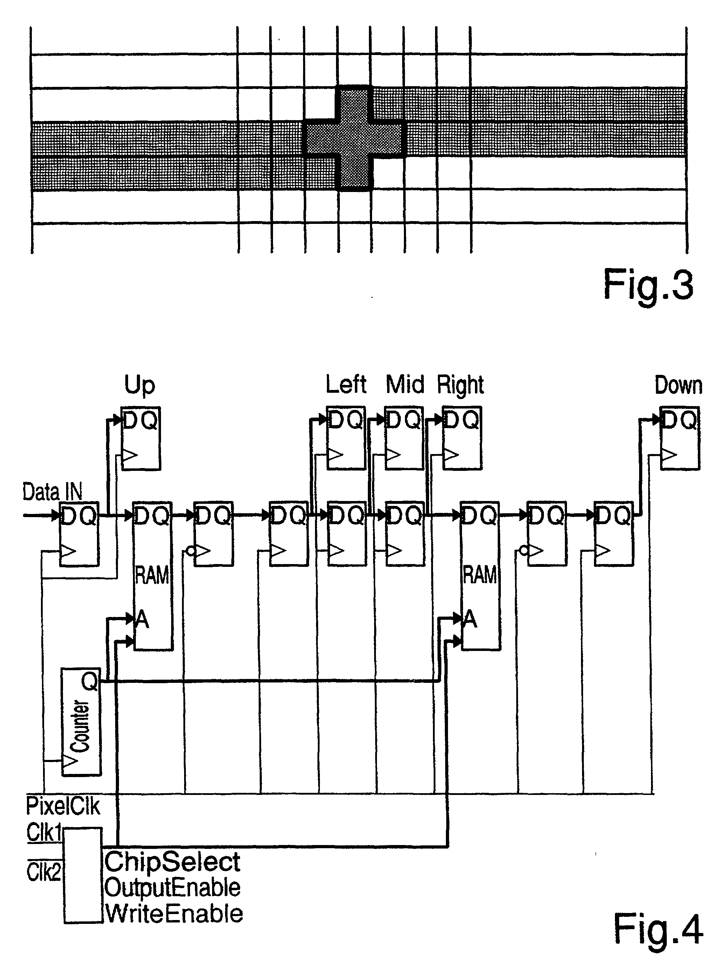

Die sequentiell Bildpunkt für Bildpunkt in die Bilddatenverarbeitungseinheit **6** eingelesenen Bilddaten werden zunächst in der Vorverarbeitungslogik **13** geglättet, um den Signal-Rausch-Abstand zu vergrößern. Dazu weist diese eine Speichereinheit in Form eines ersten Schieberegisters **15** und eine erste arithmetische Einheit **16** zur gewichteten Mittelwertbildung für die Glättung auf. Eine derartige Implementierung ist beispielsweise bekannt aus "Synthesis of a Convolver, a Generic Module for the Codesign of Reconfigurable Pipelined Accelerators" (B. Bosi et al., Workshop on Filed-Programmable Devices, Montreal, May 1995, pp.44.48). Die erste arithmetische Einheit **16** berechnet für einen Bildpunkt aus dem Wert für den zentralen Pixel und den Werten der benachbarten Pixel den Grauwert für ein geglättetes Bild. Dazu wird der Wert des mittleren Pixels mit vier multipliziert, zu den Werten der Nachbarpixel addiert und das Ergebnis anschließend mittels Division durch acht normalisiert. Multiplikation und Division werden durch Schiebeoperationen implementiert. Durch das Vorschalten des ersten Schieberegisters **15** mit einer minimalen Speicherkapazität für zwei Bildzeilen wird die Glättungsoperation in die Pipeline-Struktur eingefügt, da diese aufgrund des erforderlichen parallelen Zugriffs auf mehrere Bilddatenwerte für eine Pipelinestruktur nicht sehr geeignet ist. Das parallele Einlesen der Daten zweier Bildzeilen mit einem Schieberegister wird in Figur 3 und der Aufbau eines in einen CMOS-Standardzellenprozess integrierten Schieberegisters in Figur 4 näher erläutert.

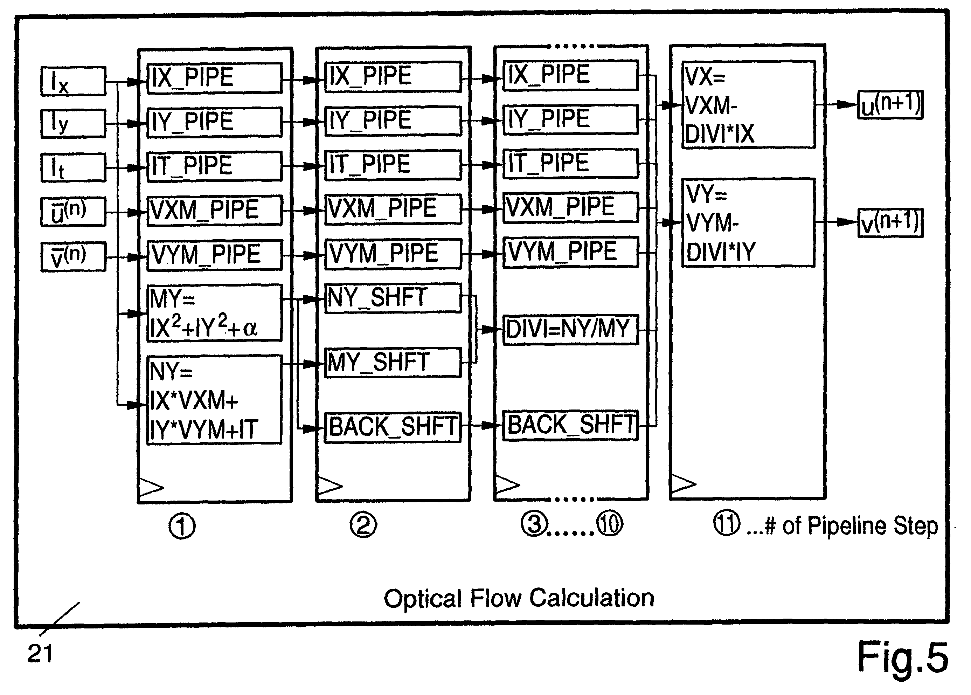

Der Block zur Ableitungsbildung **17** zur Berechnung der örtlichen ($I_x$,$I_y$) und der zeitlichen ($I_t$) Ableitungen ist ähnlich wie die Vorverarbeitungslogik **13** aufgebaut. Er besteht aus einem Schieberegister **18** und einer weiteren arithmetischen Einheit **19**. $I_x$ ist die Differenz des rechten und des linken Intensitätswertes bezüglichen des mittleren Bildpunktes, $I_y$ ist die Differenz des oberen und des unteren Wertes. $I_t$ ist die Differenz zum Wert des entsprechenden Bildpunktes im vorherigen Bild. Alle Ableitungen werden parallel berechnet. Um die zeitliche Differenz zu bilden, müssen die Bilddaten eines kompletten geglätteten Bildes zwischengespeichert werden. Daher wird ein erster externer DualPorted SRAM **20** eingesetzt. Dadurch ist es möglich, während eines Pixeltaktes einen Schreib- und einen Lesezugriff durchzuführen. Auch hier wird der Speicher als Schieberegister betrieben. Die Größe des Speichers entspricht hier allerdings der des gesamten Bildes. Die in Figur 2 nicht weiter dargestellte Kontrolleinheit **12** (vgl. Figur 1) generiert zyklisch die Adressen und die Steuersignale für den Speicher **20.** Der Block zur Berechnung des optischen Flusses **21** wird in Figur 5 näher beschrieben.

Der Block zur lokalen Mittelwertbildung der optischen Flusskomponenten **22** wird in einer Datenrückführung realisiert. Er weist zwei parallele Pfade für die beiden Flusskomponenten **u** und **v** auf, in denen ein drittes und viertes Schieberegister **23,24,** eine dritte und vierte arithmetische Einheit **25,26** und ein zweiter und dritter externer DualPorted SRAM **27,28** mit der Speicherkapazität für ein komplettes Bild angeordnet sind. Die x- und y-Komponente des optischen Flusses werden parallel verarbeitet. Die Mittelwertbildung entsteht, ähnlich wie in der Vorverarbeitungslogik **13,** aus der Summation der Intensitätswerte der vier, einem zentralen Pixel benachbarten Pixel und der anschließenden Division durch vier. Da die Werte erst wieder in die Berechnung der Werte des nächsten Bildes **n+1** eingehen, werden die Daten in den Speichern **27,28** zwischengespeichert. Die Adressen und die Kontrollsignale werden wiederum von der hier nicht dargestellten Kontrolleinheit **12** (vgl. Fig.1) erzeugt.

In **Figur 3** ist schematisch dargestellt, wie durch das Einlesen von zwei Bildzeilen in ein Schieberegister der gleichzeitige Zugriff auf den Wert eines zentralen Pixels und auf die Werte der umliegend benachbarten Pixel ermöglicht wird. Dadurch können diese Werte parallel für Mittelwert- und Differenzbildungen genutzt werden.

Die **Figur 4** zeigt die Implementierung eines Schieberegisters in einen CMOS-Standardzellenprozess. Wegen des großen Flächenbedarfs kann nicht das gesamte Schieberegister aus Standardzellen aufgebaut werden. Deshalb sind zwei RAMs implementiert, die besonders kompakt generiert werden können und deren Adressen sich durch einen gemeinsamen Zähler zyklisch durchzählen lassen. Zwei RAMs werden benötigt, da der parallele Zugriff auf den zentralen Bildpunkt und den rechten sowie linken Nachbarn möglich sein muss. Die Steuersignale für die RAMs haben den entsprechend angepassten, allgemein bekannten zeitlichen Verlauf. Die Schieberegister **15, 18, 23, 24** können baulich mit den jeweils zugehörigen arithmetischen Recheneinheiten **16, 19, 25, 26** zu einem funktionalen Block des Logikbausteins **7** (ASIC, vgl. Fig. 1) vereinigt sein.

Den Kern der Berechnungslogik **14** bildet der Block zur Berechnung des optischen Flusses **21,** in dem die Komponenten des optischen Flusses im Bild **n+1** aus denen des vorangegangenen Bildes **n** und den örtlichen und zeitlichen Ableitungen der Bildintensität in einer einfachen Iteration mit dem weiter oben beschriebenem Algorithmus parallel berechnet werden. Die Berechnung kann jedoch nicht während eines einzigen Pixelttaktes erfolgen. Das richtige Verhältnis zwischen der Berechnungsgeschwindigkeit und der Chipgröße ergibt sich aus der geeigneten Wahl der Anzahl der erforderlichen Pipelinestufen. Werden Divisionsoperationen als wiederholte Subtraktions- und Vergleichsoperationen ausgeführt, benötigt man im Ausführungsbeispiel acht von insgesamt elf Pipelineschritten zu ihrer Durchführung.

In **Figur 5** ist die Pipeline-Struktur des Blocks zur Berechnung des optischen Flusses **21** schematisch dargestellt. Aus den örtlichen und zeitlichen Ableitungen $I_x$, $I_y$ und $I_t$ sowie den Mittelwerten der Komponenten des optischen Flusses $\bar{u}(n)$, $\bar{v}(n)$ aus der Rückkopplung werden die neuen Komponenten **u(n+1), v(n+1)** nach der oben beschriebenen Gleichung (3) berechnet. Diese wird im Block **21** implementiert. In der **Pipelinestufe 1** werden die Größen **MY** und **NY** für Divisor und Dividend in der Gleichung berechnet. In **Pipelinestufe 2** werden diese dann durch Schiebeoperationen auf die Division vorbereitet. In den **Pipelinestufen 3..10** wird die Division durch wiederholte Vergleichs- und Subtraktionsvorgänge durchgeführt. Werte, die aktuell zu keiner Berechnung benötigt werden, werden in Schieberegister **(...-PIPE)** eingelesen und zur letzten **Pipelinestufe 11** durchgeschoben, in der die Berechnung der Flusskomponenten erfolgt.

Das Ausgangssignal der Bilddatenberechnungseinheit kann direkt über kommerziell zur Verfügung stehende DSP-Module weiterverarbeitenden Bildverarbeitungseinheiten zugeführt werden. Auf zwei Dimensionen bezogene Modelle erster Ordnung können auf den gemessenen optischen Fluss angewendet werden. Weiterhin können aus der zweidimensionalen Projektion der räumlichen Bewegung passende Parameter segmentierter bewegter Objekte und Oberflächeneigenschaften, wie die Raumorientierung und die Zeit bis zum Zusammenstoß, gewonnen werden. Weitere Einzelheiten zu Chipdesignmethode, Implementation und Auslegungsdaten für einen realen Ausführungsfall in einer Anwendung einer navigierbaren Roboterplattform können dem nicht vorveröffentlichten Aufsatz "A Real-Time Smart Sensor System for Visual Motion Estimation" von Th. Röwekamp et al. entnommen werden. Dieser ist für eine Veröffentlichung auf der Konferenz "European Design and Test Conference '97" vom 17. bis 20. März 1997 in Paris und in den Proceedings (Topic 4 - Digital ASIC and ASIP Design) dazu vorgesehen. Dabei wird der Begriff "Smart Sensor System" für Sensorsysteme verwendet, die ein sensorisches Element, beispielsweise einen Bilddatengeber, und Verarbeitungselemente miteinander verbinden.

**Bezugszeichenliste**

1　Sensorsystem
2　Bilddatengebereinheit
3　Bilddatengeber
4　Anpassungsbereich
5　Logikbaustein
6　Bilddatenverarbeitungseinheit
7　anwenderspezifischer Logikbaustein
8　externer Arbeitsspeicher
9　erstes Speicherelement
10　zweites Speicherelement
11　drittes Speicherelement
12　Kontrolleinheit
13　Vorverarbeitungslogik
14　Berechnungslogik
15　erstes Schieberegister
16　erste arithmetische Einheit
17　Block zur Ableitungsbildung
18　zweites Schieberegister
19　zweite arithmetische Einheit

20    erster externer DualPorted SRAM
21    Block zur Berechnung des optischen Flusses
22    Block zur lokalen Mittelwertbildung der optischen Flusskomponenten
23    drittes Schieberegister
24    viertes Schieberegister
25    dritte arithmetische Einheit
26    vierte arithmetische Einheit
27    zweiter externer DualPorted SRAM
28    dritter externer DualPorted SRAM

**Patentansprüche**

1. Kompaktes Sensorsystem zur optischen Bewegungserkennung durch Echtzeit-Berechnung der x- und y-Komponenten des optischen Flusses aus einer Bildfolge nach einem vorgegebenen Algorithmus

   • mit einer auf einer zweidimensionalen Photodiodenmatrix basierenden Bilddatengebereinheit mit einem Anpassungsbereich und einer zumindest abschnittsweise sequentiellen Bilddatenausgabe und
   • mit einer auf einem anwenderspezifischen CMOS-Logikbaustein basierenden hochratigen Bilddatenverarbeitungseinheit mit einer Vorverarbeitungs- und einer Berechnungslogik sowie einem externen, wahlfrei über zwei Parallelports zugänglichen Arbeitsspeicher und einer Kontroileinheit,

   **dadurch gekennzeichnet,** dass
   in der Bilddatenverarbeitungseinheit (6) die Umsetzung einer kontinuierlichen iterativen Berechnung der x- und y-Komponenten des optischen Flusses nach dem Gradienten-Algorithmus von Horn und Schunck ausschließlich durch eine digitale Hardware-Architektur des anwenderspezifischen CMOS-Logikbausteins (7) in Form einer konsequenten Pipeline-Struktur mit einer einfachen Datenrückführung (22) realisiert ist, in die die Vorverarbeitungslogik (13) mit einer ersten arithmetischen Recheneinheit (16) durch das Vorschalten von einem ersten Schieberegister (15) und die Berechnungslogik (14) mit drei weiteren arithmetischen Recheneinheiten (19, 25, 26) durch das Vorschalten von drei weiteren Schieberegistern (18, 23, 24) und mit einem mehrere Pipelinestufen aufweisenden Block zur Berechnung des optischen Flusses (21) integriert sind, und dass der externe Arbeitsspeicher (8) aus drei identischen Speicherelementen (9,10,11; 20,27,28) aufgebaut ist, die jeweils einer der drei weiteren arithmetischen Einheiten (19, 25, 26) zugeordnet sind.

2. Kompaktes Sensorsystem nach Anspruch 1,
   **dadurch gekennzeichnet,** dass
   die zweidimensionale Photodiodenmatrix von einem standardisierten Bilddatengeber (3) mit einer vollständig sequentiellen Datenausgabe gebildet ist.

3. Kompaktes Sensorsystem nach Anspruch 1 oder 2,
   **dadurch gekennzeichnet,** dass
   der Anpassungsbereich (4) von einem externen, freiprogrammierbaren Logikbaustein (5) gebildet ist.

4. Kompaktes Sensorsystem nach einem der Ansprüche 1 bis 3,
   **dadurch gekennzeichnet,** dass
   die Schieberegister (15, 18, 23, 24) jeweils aus zwei Speicherelementen mit wahlfreiem Zugang und einem gemeinsamen Adressenzähler bestehen.

5. Kompaktes Sensorsystem nach einem der Ansprüche 1 bis 4,
   **dadurch gekennzeichnet,** dass
   die Kontrolleinheit (12) im anwenderspezifischen Logikbaustein (7) implementiert ist.

**Revendications**

1. Un système de détection compact pour une reconnaissance optique de mouvement par calcul en temps réel des composants x et y du flux optique partir d'une séquence d'images selon un algorithme prédéfini, qui inclut

- une unité de transmission de données d'image basée sur une matrice bidimensionnelle de photodiodes comportant des zones d'adaptation et une émission séquentielle de données d'image au moins par sections et
- une unité de traitement de données d'image à haut débit basée sur un composant logique CMOS spécifique à l'utilisateur comportant une logique de traitement préalable et une logique de calcul ainsi qu'à mémoire de travail librement accessible par deux ports parallèles et une unité de commande,

caractérisé en ce que

la transformation d'un calcul itératif continu des composants x et y du flux optique dans l'unité de traitement (6) de données d'image est réalisée dans l'unité de traitement (6) de données d'image selon l'algorithme de gradients de Horn et Schunck, exclusivement au moyen d'une architecture à éléments matériels numériques du composant logique CMOS (7) spécifique à l'utilisateur sous forme d'une structure en pipe-line conséquente à exécution simple (22) de données, dans laquelle la logique de traitement préalable (13) est intégrée à une première unité arithmétique.de calcul(16) par montage en amont d'un premier registre à décalage (15) et la logique de calcul (14) est intégrée à trois autres unités de calcul arithmétiques (19, 25, 26), par montage en amont de trois autres registres à décalage (18, 23, 24), et à un bloc comportant plusieurs niveaux de pipe-line pour calculer le flux optique (21), et en ce que la mémoire de travail externe (8) consiste en trois éléments identiques de mémoire (9, 10, 11; 20, 27, 28) qui sont associés chacun à l'une des trois autres unités arithmétiques (19, 25, 26).

2. Système de capteur compact selon la revendication 1,
   caractérisé en ce que
   la matrice bidimensionnelle de phototodiodes consiste en un transmetteur normalisé (3) de données d'image à transmission totalement séquentielle de données.

3. Système de capteur compact selon la revendication 1 ou 2,
   caractérisé en ce que
   la zone d'adaptation (4) consiste en un composant logique externe (5) librement programmable.

4. Système de capteur compact selon l'une quelconque des revendications 1 à 3,
   caractérisé en ce que
   les registres à décalage (15, 18, 23, 24) consistent chacun en deux éléments de mémoire vive, ou mémoire à accès aléatoire, et d'un compteur commun d'adresses.

5. Système de capteur compact selon l'une quelconque des revendications 1 à 4,
   caractérisé en ce que
   l'unité de commande (12) est mise en application dans un composant logique (7) spécifique à l'utilisateur.


**Claims**

1. A compact sensor system for optical movement detection by real time calculation of the x and y components of the optical flow from a sequence of images according to a predetermined algorithm, comprising

   - an image data generator unit based on a two-dimensional photo diode matrix, said image data generator unit comprising an adjustment range and an image data output that is sequential at least in portions thereof, and

   - a high-rate image data processing unit based on a user-specific CMOS logic component, the processing unit comprising a pre-processing logic and a calculating logic, as well as an external main memory, selectively accessible through two parallel ports, and a control unit,

   characterized in that

   - in the image data processing unit (6), the continuous iterative calculation of the x and y components of the optical flow according to the gradient algorithm of Horn and Schunck is realized exclusively through a digital hardware architecture of the user-specific CMOS logic component (7) in the form of a consequent pipeline structure with a simple data feedback (22), into which the pre-processing logic (13) with a first arithmetic calculating unit (16) is integrated by connecting a first shift register (15) and the calculating logic (14) with three further arithmetic calculating units (19, 25, 26) is integrated by connecting three further shift registers (18, 23, 24) in series and with a block having a plurality of pipeline stages for calculating the optical flow (21), and in that the external main memory (8) is comprised of three identical memory elements (9, 10, 11; 20, 27, 28) that are associated with one of the three further arithmetic units (19, 25, 26), respectively.

2. The compact sensor system of claim 1, characterized in that the two-dimensional photodiode matrix is formed by a standardized image data generator (3) with a fully sequential data output.

3. The compact sensor system of claim 1 or 2, characterized in that the adjustment range (4) is formed by an external, freely programmable logic component (5).

4. The compact sensor system of one of claims 1 to 3, characterized in that the shift registers (15, 18, 23, 24) each comprise two storage elements with selectable access and a common address counter.

5. The compact sensor system of one of claims 1 to 4, characterized in that the control unit (12) is implemented in the user-specific logic component (7).

**Fig.1**

$$\binom{u}{v}\Bigg|_{n+1} = \binom{\bar{u}}{\bar{v}} - \frac{I_x\bar{u} + I_y\bar{v} + I_t}{I_x^2 + I_y^2 + 4\alpha^2}\binom{I_x}{I_y}\Bigg|_n$$

Optical Flow Calculation

Fig.2

Fig.3

Fig.4

Optical Flow Calculation

Fig.5

EP 0 966 727 B1